# EUROPEAN PATENT APPLICATION

(11) **EP 2 138 425 A1**
(43) Date of publication of application: **30.12.2009**
(21) Application number: 09275048.8
(22) Date of filing: 29.06.2009
(51) Int. Cl.: B65D 88/14, B65D 90/00

(54) **Container for baggages and method of loading thereof**

(30) Priority: 27.06.2008 GB 0811825
(71) Applicant: Halsmith Limited, Stourbridge West Midlands DY7 5DZ (GB)
(72) Inventor: Smith, Harold, Stourbridge West Midlands DY7 5DZ (GB)
(74) Representative: McWilliams, David John

(57) **Abstract**

A lower deck container (200) for loading onto an aircraft has compartments (210) for receiving one or more items of passenger luggage (110), for example a conventional suitcase. The compartment (210) include opposing support surfaces (230) spaced from one another so that an item of luggage (110) to be stored in the compartments (210) may span between said support surfaces (230). The spacing is configured for permitting the passage of a conveyor device (250) which is used loading and unloading operations. Hence, the compartments (230) define a vertical pathway for the passage of a loading/unloading device (250) between the support surfaces (230).

## Description

The present invention relates to a baggage handling system for an air terminal, as well as to methods and apparatus for loading baggage on to containers for carriage by aircraft or other methods of transport, and to containers for use with said methods and/or apparatus.

Commercial air terminals require baggage handling systems for processing suitcases and other passenger luggage intended to be stowed in the hold of an aircraft. It is vital that a baggage handling system operates smoothly and efficiently, since problems with such systems inevitably have a negative impact on passenger satisfaction, which may affect the terminal's ability to attract flight contracts from major airlines.

Conventional baggage-handling systems use a network of conveyors to move items of luggage from a terminal check-in area to an aircraft arrival/departure gate. Conveyors are also used to transfer luggage between arrival/departure gates during aircraft transfers, and from arrival gates to baggage-reclaim areas. However, these systems typically rely on human baggage handlers for manual loading/unloading of the luggage on to or from a container which is stored in the lower deck of the aircraft, leading to concerns over health and safety, especially when handling heavy items of luggage.

It is an object of the invention to improve baggage handling systems for air terminals.

According to a first aspect of the invention, there is provided a container, preferably a lower deck for loading onto an aircraft, the container including a compartment for receiving an item or object to be stored in the container, wherein the compartment includes opposing support surfaces spaced from one another so as to define a spacing, such that said item or object may be supported on the opposing support surfaces so as to span the spacing between said support surfaces.

Preferably, the compartment is configured for receiving items of luggage such as conventional suitcases.

More preferably, the opposing support surfaces are configured for supporting an item of luggage, for example a conventional suitcase, across the spacing.

Preferably, spacing is configured for permitting the passage of a loading/unloading device during a loading/unloading operation, for example a conveyor for carrying items of luggage to be loaded in to or removed from the container.

The container preferably includes first and second sets of said opposing support surfaces, wherein the first set is arranged above or below the second set and wherein the spacing between the first set is aligned with the spacing between the second set, so as to define a vertical pathway for the passage of a loading/unloading device between both sets of support surfaces.

Conveniently, the container includes a column of said compartments, one on top of another, and each including a spacing between opposing support surfaces, wherein the spacings define a vertical pathway for the passage of a loading/unloading device, for example a conveyor for carrying items of luggage to be loaded in to or removed from the container.

The container preferably includes a plurality of said columns, e.g. in a side by side array, so as to define a plurality of rows and columns of said compartments.

The compartments may differ in size from one another, e.g. wherein one or more compartments may be specifically configured for storing oversize items such as push chairs, skis and golf sets.

The support surfaces may take the form of opposing shelves or ledges extending horizontally with respect to a vertical axis of the compartments. Preferably, the support surfaces define the lowermost part of each compartment. For example, each compartment may have a floor, wherein a slot or recess in the floor defines a spacing between opposing support surfaces.

The support surfaces preferably include one or more recesses or cut outs. Said cut outs are preferably configured to permit the passage of an object having a width greater than the spacing between the support surfaces to pass up or down through the support surfaces.

In a particularly preferred embodiment, the support surfaces on either side of the compartment define a substantially castellated profile in plan view, most preferably a square wave profile, wherein the castellations preferably define said recesses or cut outs. As such, once appropriately positioned, it is possible for an object having a width greater than the spacing between the support surfaces to pass up or down through said recesses or cut outs. In a preferred application for the container, said object takes the form of a load carrying portion of a loading device used for presenting items of luggage to be loaded in to the container, more preferably a cantilever section of a conveyor.

According to a second aspect of the invention there is provided a luggage container for storing items of luggage on an aircraft, the luggage container including a plurality of compartments for receiving one or more items of luggage, wherein said compartments are arranged in a column, and wherein compartments in said column include opposing support surfaces spaced from one another so as to define a spacing between said support surfaces, such that an item of luggage intended to be stored in one of said compartments can be supported on the opposing support surfaces so as to span the spacing between said support surfaces.

Preferably, the column defines a vertical pathway between said support surfaces, the pathway being configured for permitting the passage of a loading/unloading device during a loading/unloading operation, for example a conveyor for carrying items of luggage to be loaded in to or removed from the container. Conveniently, the spacing between the support surfaces in each compartment is constant throughout the height of the column.

The support surfaces may take the form of opposing shelves or ledges extending horizontally with respect to a vertical axis of the compartments. Preferably, the support surfaces define the lowermost part of each compartment. For example, each compartment may have a floor, wherein a slot or recess in the floor defines a spacing between opposing support surfaces.

The support surfaces preferably include one or more recesses or cut outs. Said cut outs are preferably configured to permit the passage of an object having a width greater than the spacing between the support surfaces to pass up or down through the support surfaces. In a particularly preferred embodiment, the support surfaces on either side of the compartment define a substantially castellated profile in plan view, most preferably a square wave profile, wherein the castellations preferably define said recesses or cut outs. As such, once appropriately positioned, it is possible for an object having a width greater than the spacing between the support surfaces to pass up or down through said recesses or cut outs. In a preferred application for the container, said object takes the form of a load carrying portion of a loading device used for presenting items of luggage to be loaded in to the container, more preferably a cantilever section of a conveyor.

The container preferably includes a plurality of said columns, e.g. in a side by side array, so as to define a plurality of rows and columns of said compartments.

The container is preferably a lower deck container of the kind configured for direct loading into the hold of an aircraft, and so may be of conventional external appearance (e.g. of half or full width lower deck container).

In the first and second aspects of the invention the spacing is preferably in the region of 6-10 inches wide, such that an item of luggage, particularly a suitcase, may span the spacing without undue sag across the spacing.

According to a third aspect of the invention, there is provided a method for loading a container according to either of the above aspects of the invention, the method including the steps of: providing a loading device having an upper surface for carrying items of luggage, preferably a conveyor having a movable upper surface for transporting items of luggage; arranging said loading device in alignment with the spacing between the opposing support surfaces in a first compartment of the container, with the upper surface of the loading device arranged at a level above said opposing support surfaces; and depositing said luggage from the upper surface of the loading device on to the opposing support surfaces in said compartment via relative movement between the container and the conveyor, whereby the loading device passes between said opposing support surfaces and the luggage spans the spacing between said opposing support surfaces.

In a preferred method, the container is raised relative to the loading device such that one or more items of luggage present on the upper surface of the section of support mechanism extending within the compartment is picked up by the opposing support surfaces of said compartment, so as to span between said support surfaces. The container may then be raised further to a position in which the upper surface of the loading device is arranged above the opposing support surfaces in a subjacent compartment of the container, ready for depositing items of luggage onto the support surfaces of said subjacent compartment. This process may be repeated, e.g. until luggage has been deposited on the opposing support surfaces of each of the compartments in a first column of the container.

As such, it is preferred if the items of luggage to be deposited on the support surfaces are arranged to overhang the loading device by a distance greater than the clearance between the loading device and the opposing support surfaces, in order to be capable of spanning the spacing between said opposing support surfaces.

According to a fourth aspect of the invention, there is provided a loading device for use with a container in accordance with the first and second aspects of the invention and/or in the method of the invention, wherein the loading device includes a load carrying body which is configured to pass up or down between opposing support surfaces of a compartment within a storage container.

Preferably, the loading device has a profile in plan view which is complimentary to the opposing support surfaces. More preferably, the profile of the loading device is configured to pass between the opposing support surfaces with only relatively minor clearance. For example, the opposing support surfaces within the compartments of the container preferably define one or more recesses or cut outs, e.g. formed as castellations, preferably of square wave profile, and the load-carrying portion of said upper surface of said loading device is preferably configured to extend within one or more of said recesses or cut outs, e.g. by having a complimentary castellated or square wave profile.
The loading device may have an upper surface which includes one or more transverse members, the or each of which extends in cantilever fashion on one or both sides of the loading device, and forms a load carrying extension suitable for supporting items of luggage e.g. conventional suitcases and the like, on the loading device.

In a preferred embodiment, the loading device is a conveyor having a main body or substructure which houses a drive arrangement (e.g. a chain or belt drive) for controlling movement of an upper surface of the conveyor from which items to be stored within the container can be presented to the container. The drive arrangement is preferably encased or shielded within the substructure, so as to prevent snagging of items carried on the upper surface of the conveyor.

The loading device is preferably of shallow depth, so as to minimise the space occupied by the loading device when present within the container. In a preferred embodiment, this is achieved by minimising the size of the drive arrangement, e.g. using a small gauge chain, belt or rollers. By minimising the size of the drive arrangement, it is possible to reduce the overall depth of the substructure of the conveyor.

In a preferred embodiment, the drive mechanism for the conveyor incorporates a 3" roller chain arrangement. The drive arrangement preferably incorporates parallel drive chains or roller arrangements, arranged in a spaced manner to maintain alignment of the upper surface of the conveyor in use.

The width of the substructure is preferably configured specifically to fit between the opposing support surfaces within compartments of the container. In a preferred embodiment, the substructure is in the region of 5-9 inches wide, and more preferably 6-8 inches wide.

The upper surface of the loading device preferably defines a central section and an array of load carrying portions which extend in cantilever fashion relative to the central section, e.g. in a substantially transverse manner with respect to the direction of travel of the conveyor embodiments. The load carrying portions are arranged for supporting items of luggage which are greater in dimension than the width of the central section of the loading device. In a preferred embodiment, the load carrying portions extend in the region of 5 to 10 inches from the central section. Hence, for such embodiments, it is preferred if the support surfaces of the compartments within the container include cut outs or recesses configured so that the transverse load carrying portions of the loading device may pass through the cut outs or recess in use. The load carrying portions are preferably spaced from one another along a longitudinal axis of the loading device, and may take the form of spaced slats which overhang the main body of the loading device.

The invention also provides a baggage handling apparatus for an aircraft, including a container (preferably in accordance with the first or second aspects of the invention) having opposing support surfaces spaced from one another so as to define a spacing across which an item to be stored is intended to be span when supported by said opposing support surfaces; a loading device (preferably in accordance with the fourth aspect of the invention) having an upper surface for carrying items of luggage, said loading device being configured to pass between the support surfaces in the container; and an automated mechanism for facilitating relative movement between the container and the loading device, for the purpose of depositing one or more items on the opposing support surfaces in the compartments of the container so as to span the spacing between said support surfaces.

The apparatus preferably includes one or more robotic arms for lifting and or lowering the container relative to the loading device. Alternatively, the container may be mounted on a scissor lift mechanism for lifting or lowering the container relative to the loading device.

Preferably, the loading device is arranged for reciprocating movement in a direction orthogonal to the direction of lifting/lowering of the container, for movement in and out of the container.

The baggage handling apparatus preferably includes a control system configured to synchronise the lifting or lowering of the container relative to the loading device with the movement of the loading device.

The apparatus may further include a control system having a scanning device configured to check the orientation of items of luggage for carriage on the loading device, and an alignment mechanism configured for re-orientating items of luggage for carriage on the loading device in response to signals received from the scanning device.

Preferably, the scanning device and alignment mechanism communicate with a feed conveyor upstream from the loading device, wherein the auxiliary conveyor is arranged for depositing correctly aligned items of luggage onto the loading device for presentation to the container.

The apparatus may include a buffer zone for temporary storage of inappropriately sized items of luggage on the feed conveyor, as detected by the scanning device.

Another aspect of the invention provides a baggage handling system for a departure air terminal, the system including a check-in area for receiving items of luggage to be stored in the hold of an aircraft and a loading station configured for loading luggage onto a container for loading into the hold of an aircraft, wherein the transfer of luggage from the check-in area to the loading station and from the loading station to the container consists of an automated arrangement of conveyors.

Preferably the system is configured so that the luggage is loaded directly onto the container from the check-in area.

Preferably the system is configured so that the loading station is located immediately adjacent the check-in area. More preferably, the check-in area includes a check-in desk having a first conveyor onto which luggage is intended to be placed, and wherein the loading station is located immediately behind the check-in desk and receives luggage directly from said first conveyor.

Preferably the system is configured so that the loading station is located adjacent an aircraft departure gate.

Preferably the loading station incorporates a container in accordance with the first or second aspects of the invention, and/or a loading device in accordance with the fourth aspect of the invention. Preferably, the loading station is part of a baggage handling apparatus in accordance with the above aspect of the invention, e.g. wherein a distal end of the conveyor from the check-in area forms part of the loading device of the baggage handling apparatus.

A still further aspect of the invention provides a method of handling baggage at an airport terminal, the method including the steps of transporting items of luggage on a conveyor system to a loading station for loading onto a container, and loading items of luggage from the conveyor system onto a container for in-flight storage, wherein the items of luggage are directly loaded on to the container using an automated loading system. The automated loading system is preferably a loading device of the kind set forth above. The container is preferably of the kind set forth above.

A yet further aspect of the invention provides an airport departure terminal including a conveyor system for transporting items of luggage from a check-in area and/or a transfer flight, and a loading station configured for loading items of luggage from the conveyor system onto a container for in-flight storage, wherein the items of luggage are directly loaded on to the container using an automated conveyor system. The conveyor system preferably incorporates a loading device of the kind set forth above. The container is preferably of the kind set forth above.

The loading station may be located immediately adjacent the check-in area. Alternatively the loading station may be located immediately adjacent an aircraft waiting area. Alternatively, the loading station may be located immediately adjacent a departure gate. Alternatively the loading station may be located immediately adjacent an aircraft boarding area. The loading station preferably incorporates a baggage handling apparatus of the kind set out above. The loading station includes a loading device of the kind set out above.

Other aspects of the invention and preferred features will be readily apparent from the claims and the following description, the latter made by way of example only, with reference to the accompanying drawings, in which:
Figure 1 is a schematic block diagram representing a baggage handling system between a departure air terminal and a destination air terminal;
Figure 2 is a schematic end view of a lower deck container for storing luggage on an aircraft;
Figure 3 is a schematic side view of a preferred automated arrangement for loading luggage in to the container of Figure 2;
Figure 4 is a schematic plan view of the automated arrangement of Figure 3;
Figure 5 is a schematic plan view of part of preferred lower deck container;
Figure 6 is a schematic cross sectional side view through a preferred loading device for use with the container of Figure 5; and
Figure 7 is a schematic cross sectional end view through the loading device of Figure 6.

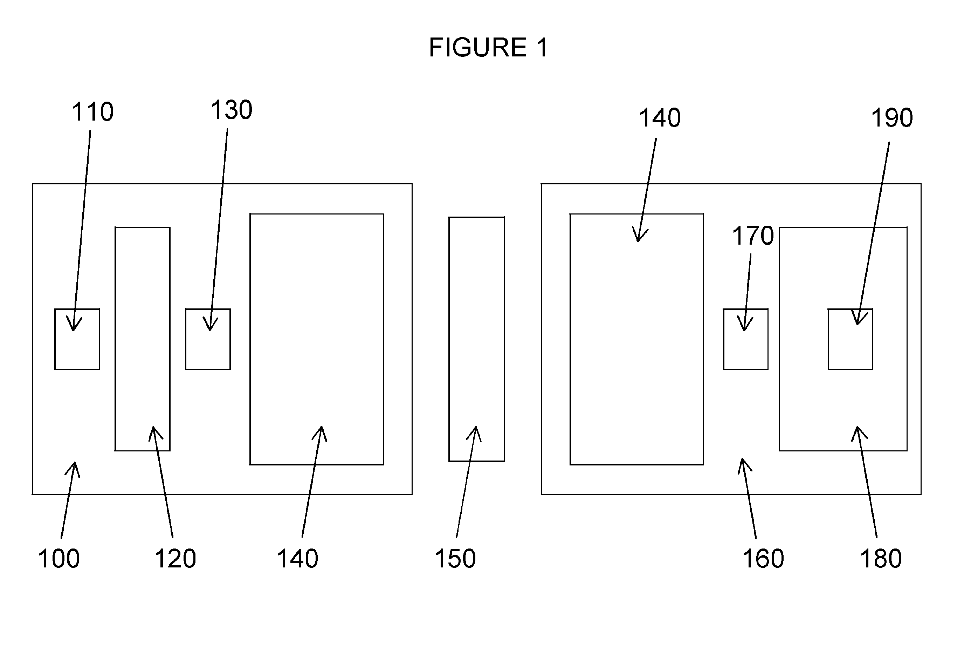

Referring firstly to Figure 1, a preferred baggage handling system for a departure air terminal 100 can be summarised as follows. Luggage 110 is processed in a known manner at a check-in area 120. The luggage 110 is transported from the check-in area 120, e.g. by conveyor, to a loading station 130, whereupon the luggage 110 is loaded on to a container 140 associated with a particular departure flight from the air terminal. Preferably, the container 140 is configured for direct loading into the hold of an aircraft 150, e.g. for flying to a destination air terminal 160.

In order to reduce the distance that the luggage 110 has to travel between check-in area 120 and loading station 130, it is preferred if the loading station 130 is located immediately adjacent the baggage check-in area 120, e.g. at a location immediately behind a check-in area desk. In effect, this means that the luggage 110 is loaded directly on to the container 140 from the check-in area, rather than at a location with is remote from the check-in area 120.

The container 140 may be transported to the aircraft 150 by a conveyor system or other transport means, for example by a wagon and/or trailer. However, it is preferred if the terminal is configured such that the loading station 130 is located as close to the aircraft 150 as possible, in order to minimise the distances between the container loading station 130 and aircraft 150.

Hence, in a preferred air terminal arrangement, the check-in area 120 is located adjacent a departure gate, and the departure gate is more preferably configured such that luggage 110 can be passed from the check-in area 120 to the loading station 130 for direct loading on to a container 140 positioned on or adjacent the departure aircraft 150.

In a preferred method of baggage handling, the luggage 110 remains in storage on the container 140 until the aircraft 150 arrives at the destination terminal 160. At the destination terminal 160, the container 140 can be unloaded from the aircraft 150 and transported to an unloading station 170, where the luggage 110 is unloaded from the container 140 for reclaiming at a baggage reclaim area 180. The baggage reclaim area 180 is preferably located adjacent the unloading station 170, to minimise the length of conveyor required for moving the luggage between unloading and reclaim. Preferably the baggage reclaim area includes a baggage reclaim carousel 190, from which passengers collect their luggage 110.

The loading and/or unloading stations 130, 170 may be arranged adjacent the aircraft 150 (e.g. at the departure/arrival gates). Moreover, the loading and/or unloading stations 130, 170 may be configured for loading/unloading the luggage 110 directly on to or from a container or other storage facility fitted on the aircraft 150, rather than a container which is remote from the aircraft during loading/unloading.

A significant advantage of the preferred baggage handling systems described above is that the luggage 110 passing through the check-in area 120 will typically be loaded/unloaded in a systematic order, meaning that the luggage 110 for a group of travellers, for example a family, will be stored together, unloaded together and subsequently presented together at the reclaim area 180. This should help to alleviate waiting times at baggage reclaim and improve passenger clearance at the destination terminal 160.

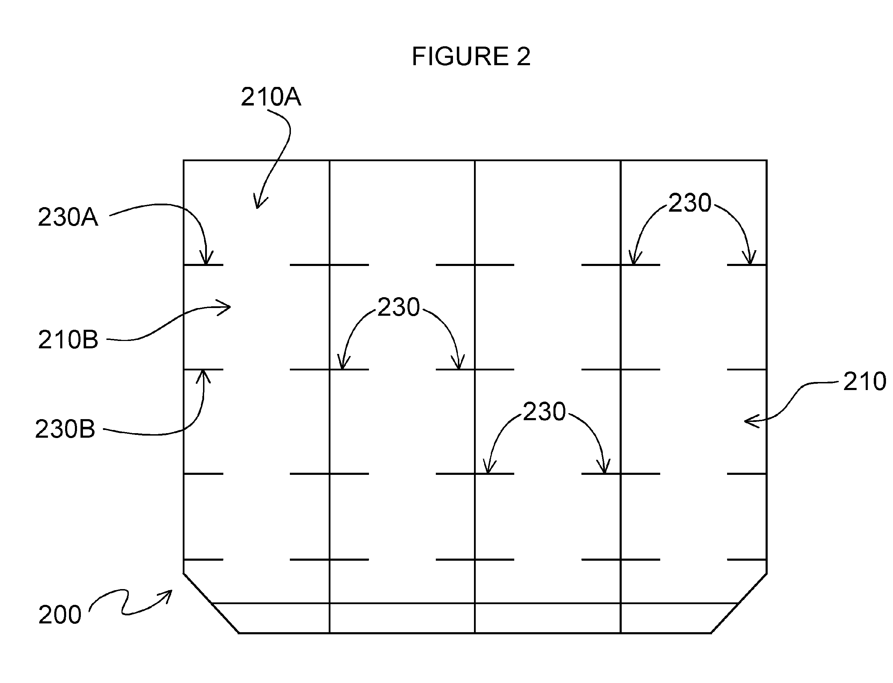

Preferably, the loading station 130 at the departure air terminal 100 is configured for automated loading of the luggage 110 on to the container 140. Similarly, it is preferred if the unloading station 170 at the destination air terminal 160 is configured for automated unloading of the luggage 110 from the container 140. Preferred methods and apparatus for automated loading/unloading of luggage will be described below with reference to Figures 2 to 7.

Referring to Figure 2, a preferred container for storing luggage on an aircraft is indicated generally at 200. The external shape of the container 200 is configured for loading into the hold of an aircraft. Most preferably, the container is a lower deck container for aircraft, the container having conventional external appearance, e.g. half or full width.

Internally, the container 200 defines a plurality of compartments 210 (here shown in a preferred array of rows and columns) for receiving one or more items of luggage 110. The height and width of specific compartments 210 within the container may be configured for receiving correspondingly sized items of luggage. For example, the compartments 210 in the central columns of the container 200 may be sized for receiving large items of luggage (e.g. the largest conventional suitcases) and the compartments in the outer columns of the container may be sized for receiving smaller items (e.g. the smallest conventional suitcases). In other embodiments, the upper levels of the container 200 may be configured for carrying larger items that than the lower levels (or vice versa), for example sets of golf clubs or skis and the like. Hence, the width and/or height of the compartments 210 may vary from row to row and/or column to column, as desired.

The compartments 210 include opposing support surfaces, in this embodiment in the form of ledges or shelf-type projections 230, on which items of luggage are intended to be carried. More particularly, it is intended that items of luggage will span between the opposing projections 230. The projections 230 preferably define the lower limit of each compartment 210. In other embodiments (not illustrated), each compartment includes a floor having a slot or recess, and wherein the floor thereby defines at least two spaced and opposing support surfaces.

The container 200 is specifically configured for use with an automated system for loading and/or unloading the container 200. In particular, the projections 230 are spaced from one another and together define a vertical pathway, which is suitable for permitting the passage of a loading/unloading device, as will be described below.

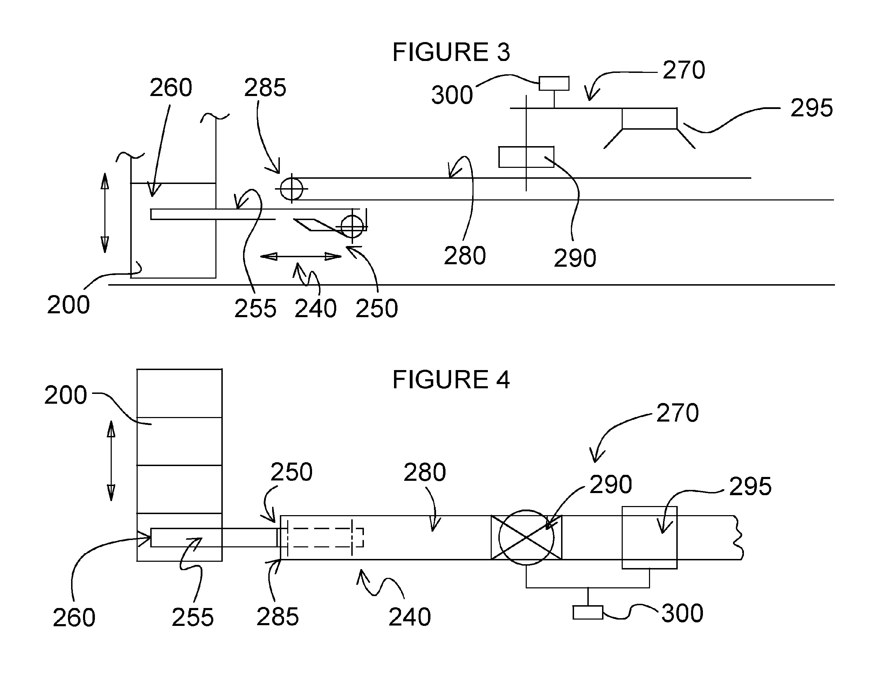

Figures 3 and 4 shows an example of a preferred loading system for use in loading or unloading items of luggage from an aircraft luggage storage container, preferably the container 200.

The system, indicated generally at 240, incorporates a loading/unloading device in the form of a conveyor 250 having a movable upper surface 255, e.g. of slat or belt construction. The conveyor 250 is configured for transporting luggage on the surface 255, e.g. in the direction of a discharge end 260 of the conveyor 250, e.g. to the left as viewed in Figures 3 and 4, for the purpose of a loading operation. Importantly, the conveyor 250 is preferably configured to pass between the opposing support surfaces 230 in the container 200.

It is preferred if the container 200 is mounted for movement relative to the conveyor 250, e.g. on one or more robotic arms.

In a preferred method of loading the container 200, the discharge end 260 of the conveyor 250 is arranged in a first compartment 210A of the container 200, in alignment with the spacing between the opposing projections 230A of said compartment 210A and with the upper surface 255 of the conveyor 250 arranged at a level above said opposing projections 230A.

The container 200 is then raised relative to the conveyor 250, e.g. by one or more robotic arms, one or more hydraulic/pneumatic jacks or a scissor lift mechanism, such that one or more items of luggage present on the upper surface 255 of the conveyor 260 within the compartment 210A may be picked up by the opposing projections 230A of said compartment 210A, such that the or each item of luggage 110 spans between the opposing projections 230A.

The container 200 may be raised further, e.g. to a position in which the upper surface 255 of the conveyor 250 is arranged above the opposing projections 230B in a subjacent compartment 210B of the container 200 (again in register with the spacing between the opposing projections 230B). Hence, by then further raising the container one or more additional items of luggage can be picked up by the opposing projections 230A.

This process may be repeated until luggage has been deposited in each of the compartments 210 in a first column of the container 200. A reverse operation can be used to unload luggage from the container. Hence, it will be understood that the arrangement shown in Figures 3 and 4 can be used in loading and/or unloading operations.

The conveyor 250 may be intended for use in loading more than one column of the container 200, e.g. the container 200 or conveyor 250 may be configured for sideward movement for alignment of the conveyor 250 with a second column of the container 200. In addition or as an alternative, multiple conveyors 250 (e.g. arranged side by side) may be used for simultaneous loading of multiple columns within the container 200.

In the most preferred embodiments, the container 200 is mounted on one or more robotic arms (not shown) for raising and lowering the container 200 relative to the discharge end 260 of the conveyor 250. The robotic arm(s) may also be used for movement of the container in a sideward manner for alignment of respective storage columns with the conveyor 250. Although such robotic means may also be used for movement of the container 200 left and right as viewed in Figures 3 and 4, for positioning a compartment about the distal end 260 of the conveyor 250, it is preferred if the conveyor 250 is arranged for movement in and out relative to the container 200, e.g. using robotic or hydraulic means.

It should be understood that the conveyor may be arranged for vertical movement (e.g. up and down) relative to the container for loading/unloading, as well as in and out and/or side-to-side, as preferred, e.g. using conventional mechanical lifting means such as robotic arms, hydraulic/pneumatic jacks or scissor-lift mechanisms (not shown).

The raising or lowering movement of the container 200 relative to the conveyor 250 and/or the movement of the conveyor 250 relative to the container 200 is preferably synchronised with the movement of luggage along the upper surface 255 of the conveyor 250, in order to provide controlled loading of the container 200, preferably in a substantially continuous manner between adjacent storage levels in the container 200.

The illustrated embodiment includes a control system indicated generally at 270, which includes a feed conveyor 280, an alignment mechanism 290 and a scanning device 295.

The feed conveyor 280 is arranged for receiving and transporting items of luggage 110 and has a discharge end 285 which is arranged for depositing luggage 110 onto the loading conveyor 250. The feed conveyor 280 may be arranged for receiving items of luggage direct from the check-in area of an air terminal.

The scanning device 295 is arranged upstream from the discharge end 285 of the feed conveyor 280, and is configured to check the orientation of items of luggage on the feed conveyor 280, e.g. to check that that each is capable of spanning between the opposing projections in the container to be loaded. The alignment mechanism 290 is arranged downstream from the scanning device 295, and is configured for rotating items of luggage on the conveyor 280, in order to place the luggage in the correct alignment with the opposing projections in the container to be loaded, before the luggage is deposited onto the loading conveyor 250. Preferably, the alignment mechanism 290 and scanning device 295 are arranged in communication with a control processor, e.g. as indicated at 300, such that the alignment mechanism 290 is operated by the control processor 300 in response to signals received from the scanning device 295.

A temporary storage or buffer facility may be incorporated, whereby when the scanning device 295 detects the presence of an inappropriately sized item of luggage on the feed conveyor 280, said item of luggage is removed from the feed conveyor 280 (e.g. by automated means, preferably forming part of the alignment mechanism). Said items of luggage may be placed in temporary storage and then replaced on the feed conveyor 280 at a later time (by manual or automated means) or may be manual loading into the container or aircraft.

It should be understood that the systems and/or loading devices described with reference to Figures 3 and 4 may be incorporated in the loading/unloading stations at an air terminal, preferably in the manner described with reference to Figure 1.

In the systems described above, a conveyor having a movable upper surface is used to present items of luggage for loading in to the container. The upper surface of the conveyor may be static during loading. To that extent, it may be preferred to replace the loading conveyor of the above embodiments with a loading arrangement or mechanism having a static, non-movable surface for carrying the items of luggage, wherein said surface can be loaded with items of luggage and then arranged within the confines of a compartment of the container, ready for depositing the luggage on to the opposing support surfaces within the compartment (i.e. as a result of relative movement between the container and support arrangement after the positioning of luggage on the loading arrangement).

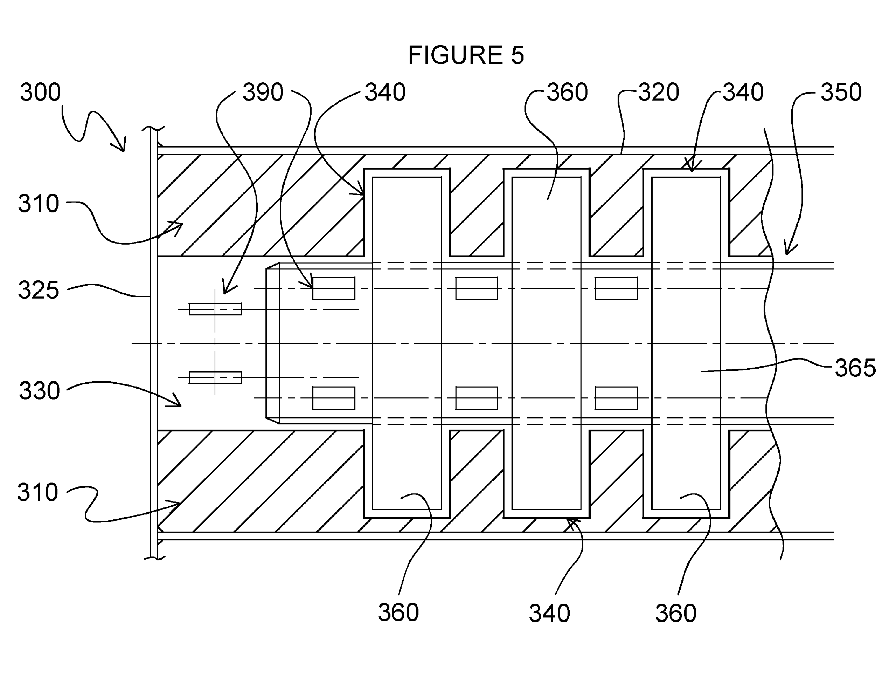

Referring now to Figure 5, there is shown part of a modified compartment 300 for a container of the kinds described with respect to Figure 2.

The compartment 300 includes opposing support surfaces 310 in the form of shelves or ledges, which extend from the side walls 320 of the compartment. The support surfaces 310 are spaced from one another so as to define a central opening 330. In use, an item of luggage is intended to be deposited on the opposing support surfaces 310, so as to span the opening 330. In a preferred embodiment, the width of the compartment 300 is suitable for receiving a conventional suitcases (e.g. in the range of 24 to 40 inches) and the width of the opening 330 in the compartment is in the region of 7 to 10 inches. Hence, suitcases may be readily arranged on the opposing support surfaces 310 without undue sagging across the opening 330.

As with the embodiment of Figure 2, a plurality of said compartments 300 are preferably aligned in a column, one above another, whereby the openings 330 in the compartments cooperate to define a vertical pathway for the passage of a luggage loading device between said support surfaces 310.

In the illustrated embodiment, the support surfaces 310 include recesses or cut outs 340. Said cut outs 340 are configured to permit the passage of an object having a greater width than the opening 330. In this embodiment, the support surfaces 310 define a substantially castellated, square wave profile in plan view. However, other recessed profiles are within the contemplation of preferred embodiments of the invention.

A modified device or arrangement for use in loading/unloading items of luggage into the compartment 300 is indicated generally at 350 in Figures 5 to 7. In this embodiment, the loading device 350 is in the form of a conveyor.

The conveyor 350 has a movable surface indicated generally at 355, which includes a plurality of transverse load carrying projections 360 extending in cantilever fashion from the sides the conveyor 350. The projections 360 are arranged for supporting items of luggage which are greater in dimension than the width of the central section of the conveyor 350. In a preferred embodiment, the projections 360 extend a distance in the region of 5 to 10 inches from the side of the conveyor 350.

The array of transverse projections 360 is preferably configured for cooperation with the array of recesses or cut outs 340 in the opposing support surfaces 310, for example as shown in Figure 5. In particular, when static, the surface 355 of the conveyor should be able to pass between the opposing surfaces 310, with the projections 360 passing between the recesses or cut outs 340. It is preferred if the cut outs 340 and transverse projections 360 are configured such that there is only relatively minor clearance between the conveyor 350 and the opposing support surfaces 310, e.g. in the region of 0.5 to 1.5 inches of clearance.

In this embodiment, the transverse projections 360 are part of transverse members in the form of slats 365, arranged in a spaced manner and which extend from either side of the conveyor 350. In other embodiments, the projections may extend from the conveyor in an alternating array, e.g. wherein a first projection 360 extends from a first side of the conveyor, a second projection 360 extends from a second side of the conveyor and a third projection 360 extends from said first side of the conveyor etc. In such embodiments, the slats may be laid in abutment with one another, and the profile of the support surfaces 310 will need to be adapted accordingly.

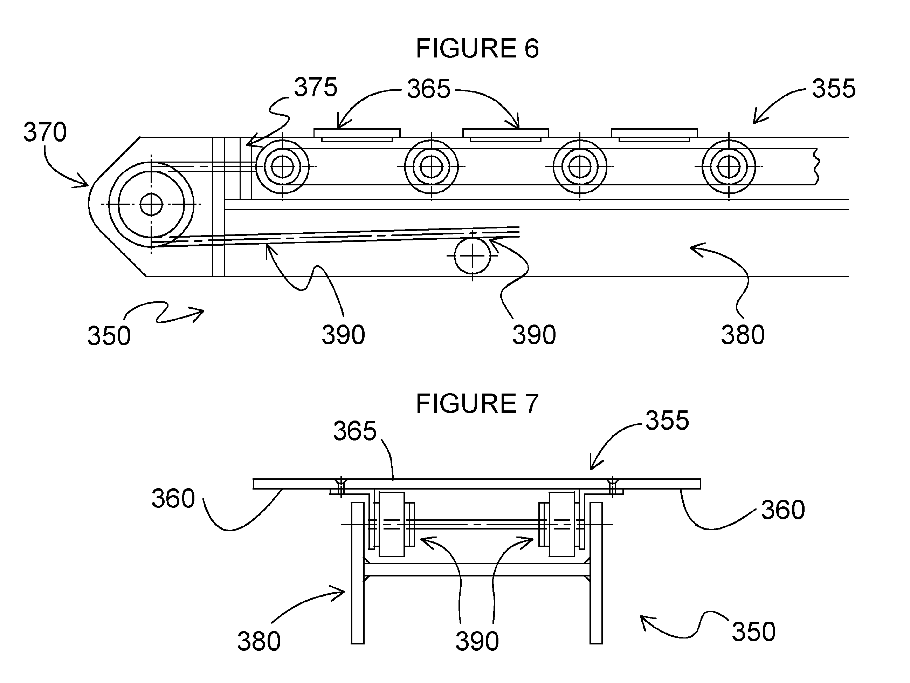

The conveyor 350 has distal end 370, to the left as viewed in Figure 6, which is intended to be positioned within the confines of the compartment 300, e.g. in abutment with or in close proximity with a rear wall 325 of the compartment 300. In the illustrated embodiment, the conveyor 350 includes a stop 375, against which a leading slat 365 is intended to abut during movement of the upper surface 355 in the direction of the distal end 370, so as to prevent further movement of the upper surface 355. The stop 375 is preferably positioned relative to the distal end 370 of the conveyor 350, such that when the leading slat 365 is in abutment with the stop 375 and the distal end 370 of the conveyor 350 is arranged in abutment with the rear wall 325, the projections 360 of the conveyor 350 are aligned with the recesses or cut outs 340 in the compartment 300. However, other means of coordinating the position of the projections 360 with the recesses or cut outs 340 may be preferred.

Referring now to Figures 6 and 7, the conveyor 350 includes a mechanism for controlling movement of the upper surface 355 of the conveyor 350. The mechanism, indicated generally at 390, is located beneath the upper surface 355 of the conveyor 350 and is preferably encased or substantially shielded from the upper surface 355, so as to prevent snagging of items of luggage or the like which are carried on the upper surface 355 of the conveyor 350 in use.

In preferred embodiments, the mechanism 390 is housed in a substructure 380 beneath the upper surface 355 of the conveyor 350, e.g. as shown in Figure 7. The substructure 380 may take the form of an open or closed box frame, for example.

In the illustrated embodiment, the mechanism 390 incorporates a drive chain arrangement, preferably including a 3 inch pitch roller chain, and a drive unit (not shown) for driving the or each drive chain. The drive unit is preferably mounted away from the distal end 370, e.g. at the opposite end of the conveyor 350. This is one way in which the depth of a lead section of the conveyor 350 can be optimised, particularly the section which is intended for location within the container, to minimise the space occupied by the conveyor 350 within a container 300 during a loading/unloading operation,. In the preferred embodiment, the depth of the lead section of conveyor is in the region of 3 to 5 inches.

As can be seen from Figures 5 and 7, the mechanism 390 incorporates parallel drive chains and roller arrangements, arranged in a spaced manner in the transverse axis of the conveyor 350, for maintaining alignment of the upper surface of the conveyor 350 in use.

It should be understood that alternative drive mechanisms are envisaged, for example drive belt type mechanisms, as opposed to chain drive mechanisms. In each embodiment, is it preferred if the depth of the lead section of conveyor is optimised (e.g. by locating the drive unit at an opposite end of the conveyor, wherein said opposite end may have a greater depth than the lead section).

The width of the substructure 380 is configured to fit between the opposing support surfaces 310 within compartment 300, and may be as little as 6-10 inches wide in preferred embodiments.

Whilst the above description refers to a loading/unloading device in the form of a conveyor, the loading device may also take the form of an arrangement or mechanism having a static upper surface, but preferably having the same or similar attributes as the conveyor 350, e.g. at least in terms of lead depth, and/or profile in plan view and/or clearance with the opposing surfaces within the container.

The loading devices referred to above may be suitable for use with the containers and systems described with reference to Figures 1, 2 and 3 to 4.

Although the above description has been made with specific reference to air terminals, the containers, loading/unloading systems and methods described herein are also applicable to other industries, such as shipping, road haulage and rail freight, as well as to warehouse storage and the like.

## Claims

1. A lower deck container for loading onto an aircraft, the container including a compartment for receiving one or more items of passenger luggage, for example a conventional suitcase, wherein the compartment includes opposing support surfaces spaced from one another so as to define a spacing therebetween, such that an item of luggage to be stored in the compartment may be supported on the opposing support surfaces so as to span the spacing between said support surfaces.

2. A container according to claim 1 wherein the spacing is configured for permitting the passage of a loading/unloading device for said item(s) of luggage during a loading/unloading operation, and is preferably in the region of 6 to 10 inches.

3. A container according to claim 1 or claim 2, including first and second sets of said opposing support surfaces, wherein the first set is arranged above or below the second set and wherein the spacing between the first set is aligned with the spacing between the second set, so as to define a vertical pathway for the passage of a loading/unloading device between both sets of support surfaces.

4. A container according to any of claims 1 to 3 wherein the container includes a column of said compartments, one on top of another, and each including a spacing between opposing support surfaces, wherein the spacings define a vertical pathway for the passage of a loading/unloading device, for example a conveyor for carrying items of luggage to be loaded in to or removed from the container.

5. A container according to claim 5 wherein each compartment has a floor, and wherein a slot or recess in the floor defines the spacing between opposing support surfaces.

6. A container according to claim 4 or claim 5, including a plurality of said columns, e.g. in a side by side array, so as to define a plurality of rows and columns of said compartments.

7. A container according to any preceding claim wherein the support surfaces take the form of opposing shelves or ledges.

8. A container according to any preceding claim wherein the support surfaces include one or more recesses or cut outs configured to permit the passage of an object having a width greater than the spacing between the support surfaces to pass up or down through the support surfaces.

9. A container according to any preceding claim wherein the support surfaces have a substantially castellated profile in plan view.

10. A container according to any preceding claim wherein the support surfaces define a square wave profile.

11. A luggage container for storing items of luggage on an aircraft, the luggage container including a plurality of compartments for receiving one or more items of luggage, wherein said compartments are arranged in a column, and wherein compartments in said column include opposing support surfaces spaced from one another so as to define a spacing between said support surfaces, such that an item of luggage intended to be stored in one of said compartments can be supported on the opposing support surfaces so as to span the spacing between said support surfaces.

12. A luggage container according to claim 11 wherein the column defines a vertical pathway between said support surfaces, the pathway being configured for permitting the passage of a loading/unloading device during a loading/unloading operation, for example a conveyor for carrying items of luggage to be loaded in to or removed from the container.

13. A method for loading a container of any of claims 1 to 12, the method including the steps of: providing a loading device having an upper surface for carrying items of luggage, arranging said loading device in alignment with a spacing between opposing support surfaces in a first compartment of the container, with the upper surface of the loading device arranged at a level above said opposing support surfaces; and depositing said luggage from the upper surface of the loading device on to the opposing support surfaces in said compartment via relative movement between the container and the conveyor, whereby the loading device passes between said opposing support surfaces and the luggage spans the spacing between said opposing support surfaces.

14. A method according to claim 13 wherein the container is raised relative to the loading device such that one or more items of luggage present on the upper surface of the section of support mechanism extending within the compartment is picked up by the opposing support surfaces of said compartment, so as to span between said support surfaces.

15. A method according to claim 14 wherein the container is then raised further to a position in which the upper surface of the loading device is arranged above opposing support surfaces in a subjacent compartment of the container, ready for depositing items of luggage onto the support surfaces of said subjacent compartment.
